# EUROPÄISCHE PATENTSCHRIFT

(11) **EP 2 559 544 B1**
(45) Veröffentlichungstag und Bekanntmachung des Hinweises auf die Patenterteilung: **13.06.2018**
(21) Anmeldenummer: 12179848.2
(22) Anmeldetag: 09.08.2012
(51) Int. Cl.: B29C 49/42, B29C 49/48, B29C 33/30, B29C 49/36, B29C 49/06

(54) **Vorrichtung und Verfahren zum Umformen von Kunststoffvorformlingen zu Kunststoffbehältnissen mit Druckkissen**
Device and method for reforming plastic preforms into plastic containers with pressure pads
Dispositif et procédé de déformation d'ébauches en plastique en conteneurs en plastique dotés de coussins de pression

(30) Priorität: 19.08.2011 DE 102011052863
(43) Veröffentlichungstag der Anmeldung: 20.02.2013
(73) Patentinhaber: Krones AG, 93073 Neutraubling (DE)
(72) Erfinder: Blochmann, Erik, 93073 Neutraubling (DE); Geltinger, Florian, 93093 Donaustauf (DE); Philipp, Thomas, 93161 Sinzing-Eilsbrunn (DE)
(74) Vertreter: Bittner, Bernhard

(56) Entgegenhaltungen:
- EP-A2- 2 263 855
- DE-A1-102009 050 637
- DE-T2- 60 001 269
- DE-T2- 60 113 860
- DE-U1- 20 007 429
- DE-U1-202004 011 785
- US-A- 6 099 286
- US-A1- 2004 202 745
- US-A1- 2005 142 243

## Beschreibung

Die vorliegende Erfindung bezieht sich auf eine Vorrichtung und ein Verfahren zum Umformen von Kunststoffvorformlingen zu Kunststoffbehältnissen. Derartige Vorrichtungen und Verfahren sind aus dem Stand der Technik seit langem bekannt. So ist es beispielsweise bekannt, dass Blasformen bzw. Blasformteile an Trägern angeordnet werden und diese Träger auseinander und zusammengeklappt werden können, wobei in einem geschlossenen Zustand der Blasform Kunststoffvorformlinge im Inneren dieser Blasform, insbesondere durch Beaufschlagung mit Druckluft zu Kunststoffbehältnissen expandiert werden.

In der Regel sind dabei zwei Formträgerschalen vorgesehen, an denen jeweils fest die Blasformteile angeordnet sind. Diese Formträgerschalen sind wiederum an einem Blasformträger bzw. einem Blasformträgerteil angeordnet.

Im Stand der Technik ist es bekannt, die Blasformteile mit Hilfe von Laschen zu befestigen. Diese Laschen können dabei in der Art von Spannpratzen ausgeführt sein, zu deren Betätigung im Allgemeinen ein Werkzeug zum Spannen notwendig ist. Mit einem fest definierten Drehmoment werden die Schrauben dieser Spannpratze beaufschlagt, um ein richtiges Spannen der Formschale in der Formträgerschale zu erreichen. Üblicherweise sind dabei bis zu drei derartiger Laschen zum Spannen für das linke und rechte Blasformteil nötig. Der dafür benötige Zeitaufwand zum Wechseln der Blasformteile bzw. der Formschalen beeinflusst die Stillstandszeit direkt.

Das Dokument US-A-2004202745 offenbart eine Vorrichtung und ein Verfahren gemäß den Oberbegriffen der Ansprüche 1 und 7. Steigende Produktionszahlen sind wichtige Kennwerte insbesondere für die Kunden der hier gegenständlichen Anlagen. Der vorliegenden Erfindung liegt daher die Aufgabe zu Grunde, Stillstandszeiten insbesondere Stillstandszeiten aufgrund von Garniturenwechseln zu verringern. Eine weitere Aufgabe der vorliegenden Erfindung liegt darin, ein Schnellwechselsystem zur Verfügung zu stellen, welches sich ohne Zusatzwerkzeug bedienen lässt. Eine weitere Aufgabe besteht darin, eine einfache und schnelle Handhabung zu erreichen, ohne dass hierfür ein manuelles Bedienen von Verriegelungen erforderlich ist.

Diese Aufgaben werden erfindungsgemäß durch die Gegenstände der unabhängigen Ansprüche erreicht.

Vorteilhafte Ausführungsformen und Weiterbildungen sind Gegenstand der Unteransprüche. Eine erfindungsgemäße Vorrichtung zum Umformen von Kunststoffvorformlingen zu Kunststoffbehältnissen wird durch den Anspruch 1 offenbart. Die Halteeinrichtung weist einen Betätigungskörper auf, der sich durch eine in einer Wandung des Blasformträgerschalenteils und/oder eine in einer Wandung eines Blasformträgerteils ausgebildete Öffnung erstreckt, wobei dieser Betätigungskörper gegenüber der Wandung bewegbar ist und wobei an dem Betätigungskörper ein erstes Halteelement zum Halten des Blasformteils angeordnet ist.

Vorteilhaft erstreckt sich daher der Betätigungskörper bzw. wenigstens ein Abschnitt dieses Betätigungskörpers durch die Wandung des Blasformträgerschalenteils und/oder die Wandung des Blasformträgerteils hindurch. Vorzugsweise umgibt daher das Blasformträgerschalenteil und/oder das Blasformträgerteil in dem Bereich, in dem der Betätigungskörper durch dieses Teil hindurchtritt, den Betätigungskörper in dessen Umfangsrichtung vollständig.

Im Gegensatz zum Stand der Technik, bei dem üblicherweise die Blasformteile durch die erwähnten seitlich bewegbaren Haltepratzen eingespannt werden, wird nunmehr vorgeschlagen, die Montage bzw. die Halterung durch einen Betätigungskörper zu erreichen, der sich durch die besagte Wandung der Blasformträgerschale bzw. des Blasformträgerschalenteils erstreckt. Es wäre dabei auch möglich, dass eine Vollform verwendet wird. In diesem Fall würde sich der Betätigungskörper durch eine Öffnung in dem Blasformträgerteil erstrecken. Erfindungsgemäß ist dabei die Bewegung des Betätigungskörpers gegenüber der Wandung durch ein fließfähiges Medium und insbesondere pneumatisch erzeugbar. Es wäre jedoch auch möglich, dass die Bewegung des Betätigungskörpers hydraulisch initiiert wird oder auch durch magnetische Elemente, beispielsweise einen Elektromagneten. Ein entsprechendes (beispielsweise pneumatisch) angesteuertes Betätigungssystem ist daher in diesem System vorteilhaft im Wesentlichen vollständig in der Blasformträgerschale integriert. Ein Anschluss, beispielsweise ein pneumatischer Anschluss, kann direkt über das Blasformträgerschalenteil bei einem vorteilhaften Blasformträgerschalenteil in den Formträgerhälften verbaut sein. Bei dem Betätigungskörper kann es sich beispielsweise um ein Kolbenelement handeln, welches, wie oben erwähnt, pneumatisch bewegbar ist. Damit nimmt dieser Kolben bzw. der Betätigungskörper die Funktion eines Spannhakens wahr. Der Spannhaken stellt eine bevorzugte Ausführungsform des oben erwähnten Halteelements dar und nimmt vorteilhaft sowohl die Aufgabe einer Rasterstellung während des Einlegens des Blasformteils als auch andererseits die Aufgabe des Spannens des Blasformteils wahr.

Bei einer vorteilhaften Ausführungsform ist an wenigstens einem Blasformträgerschalenteil ein Anschluss für ein fließfähiges Medium und insbesondere für ein gasförmiges Medium angeordnet.

Bei einer weiteren vorteilhaften Ausführungsform weist der Betätigungskörper einen druckmittelbeaufschlagbaren Kolben auf. Dieser Kolben kann dabei in einem Zylindersystem angeordnet sein. An dem besagten Kolben ist wiederum vorteilhaft das Halteelement - bevorzugt fest - angeordnet.

Bei einer weiteren vorteilhaften Ausführungsform ist die Öffnung in der Wandung in einer in der Wandung ausgebildeten Ausnehmung der Wandung angeordnet. Diese Wandung kann sich dabei in einer radialen Richtung der geschlossenen Blasform nach außen erstrecken. Durch diese Ausnehmung wird das Einlegen des jeweiligen Blasformteils erleichtert. Erfindungsgemäß ist an dem Blasformteil ein zweites Halteelement befestigt, welches zum Befestigen des Blasformteils an dem Blasformträgerschalenteil mit dem ersten Halteelement zusammen wirkt. So kann beispielsweise an dem Blasformteil ein Griffelement angeordnet sein, beispielsweise angeschraubt sein, in welches das besagte erste Halteelement eingreift. Durch das Zusammenwirken dieser beiden Halteelemente wird das Blasformteil an dem Blasformträgerschalenteil befestigt. Vorteilhaft ist dabei das zweite Halteelement starr mit dem Blasformteil verbunden. Erfindungsgemäß hintergreift in einem befestigen Zustand des Blasformteils an dem Blasformträgerschalenteil ein Halteelement, das zweite Halteelement. Vorteilhaft hintergreift das an dem Blasformträgerschalenteil angeordnete Halteelement das an dem Blasformteil angeordnete Halteelement.

Bei einer weiteren vorteilhaften Ausführungsform steht das zweite Halteelement gegenüber einer Wandung des Blasformteils hervor. So kann das zweite Halteelement beispielsweise an einem Träger angeordnet sein und ein Abschnitt des Trägers kann gegenüber der besagten Wandung des Blasformteils hervorstehen. Dieser hervorstehende Abschnitt kann dabei in die oben erwähnte Ausnehmung in der Wandung des Blasformträgerschalenteils eingreifen.

Dabei ist es möglich, dass das oben erwähnte Halteelement oder ein anderer Vorsprung in die Ausnehmung ragt, wobei jedoch auch umgekehrte Ausführungsformen denkbar sind. Vorteilhaft ist eine Relativbewegung des Blasformteils gegenüber den Blasformträgerschalenteilen nur in einem gelockerten Zustand der Halteeinrichtung möglich, nicht aber in einem fest montierten bzw. befestigten Zustand. Vorteilhaft handelt es sich bei dieser Relativbewegung um eine Drehbewegung des Blasformteils bezüglich einer vorgegebenen Drehachse gegenüber dem Blasformträgerschalenteil. Bei einer weiteren vorteilhaften Ausführungsform ist an dem Blasformträgerschalenteil auch eine Halterung für einen Blasformträger angeordnet.

Bei einer weiteren vorteilhaften Ausführungsform ist in wenigstens einem Zustand trotz des Eingriffs der Halteelemente ineinander eine Relativbewegung eines Blasformteils gegenüber dem dieses Blasformteil haltenden Blasformträgerschalenteil ermöglicht. So ist es möglich, dass zum Einsetzen des Blasformteils dieses Blasformteil zunächst an das Blasformträgerteil angedrückt und anschließend in diesem angedrückten Zustand bewegt wird, um eine vorgegebene Endstellung zu erreichen. Erfindungsgemäß ist wenigstens ein Blasformträgerschalenteil an einem Blasformträgerteil angeordnet und zwischen dem Blasformträgerteil und dem Blasformträgerschalenteil ist eine Druckkissenanordnung ausgebildet. Durch diese Druckkissenanordnung können während des Expansionsvorgangs die beiden Blasformteile aufeinander zugedrückt werden und auf diese Weise kann eine Kontur der Behältnisse verbessert werden.

Die vorliegende Erfindung ist weiterhin auf ein Verfahren zum Befestigen von Blasformteilen an Blasformträgerschalenteilen gemäß Anspruch 7 gerichtet. Das Blasformteil wird nach dem Anlegen an das Blasformträgerschalenteil gegenüber dem Blasformträgerschalenteil derart bewegt, dass an dem Blasformträgerschalenteil angeordnetes erstes Halteelement und ein an dem Blasformteil angeordnetes zweites Halteelement in Eingriff miteinander gelangen. Anschließend wird das an dem Blasformträgerschalenteil angeordnete erste Halteelement in einer weiteren Richtung bewegt, um das Blasformteil an dem Blasformträgerschalen zu arretieren, wobei die Bewegung des ersten Halteelements durch einen Betätigungskörper erzeugt wird, der sich wenigstens teilweise durch eine Wandung des Blasformträgerschalenteils erstreckt.

Im Gegensatz zum Stand der Technik wird daher auch eine veränderte Vorgehensweise zum Befestigen des Blasformteils an dem Blasformträgerschalenteil vorgeschlagen. So ist es möglich, dass zunächst das Blasformteil an das Blasformschalenträgerteil angelegt und anschließend gegenüber diesem verdreht wird. Erst in diesem verdrehten Zustand wird das Blasformteil durch den besagten Betätigungskörper fest arretiert. Erfindungsgemäß erfolgt die Betätigung des Betätigungskörpers durch ein fließfähiges, insbesondere gasförmiges Medium und besonders bevorzugt pneumatisch. Bei der Verwendung einer pneumatischen Ansteuerung kann vorteilhaft die Versorgung mit Druckluft zum Druckaufbau zur Bewegung des Betätigungskörpers über eine Betriebsfunktion der gesamten Vorrichtung, wie beispielsweise einer Blasmaschine bzw. Streckblasmaschine, gesteuert werden. Erfindungsgemäß ist zwischen wenigstens einem Blasformträgerteil und dem an diesem Blasformträgerteil angeordneten Blasformteil eine Druckkissenanordnung angeordnet, wobei eine Druckkammer bzw. eine Druckkisseneinrichtung dieser Druckkissenanordnung mit einem fließfähigen Druckmittel beaufschlagbar ist, um durch eine zwischen dem Blasformträgerteil und dem Blasformteil wirkende Kraft das wenigstens eine Blasformträgerteil und das an diesem angeordnete Blasformteil auseinander zu drängen.

Vorteilhaft ist die Druckkissenanordnung derart ausgebildet, dass die zwischen dem Blasformträgerteil und dem Blasformteil wirkende Kraft eine erste Teilkraft aufweist, die in einem ersten vorgegebenen - und bevorzugt räumlich definierbaren bzw. abgrenzbaren - und bevorzugt räumlich definierbaren bzw. abgrenzbaren - Bereich in der Umfangsrichtung des Blasformteils wirkt, so wie eine zweite Teilkraft, die in einem zweiten vorgegebenen Bereich in der Umfangsrichtung des Blasformteils wirkt, wobei der ersten Bereich und der zweite Bereich voneinander beabstandet sind und die Richtungen der ersten Teilkraft und der zweiten Teilkraft in einem vom 0 Grad unterschiedlichen Winkel zueinander verlaufen.. Die vorgegebenen Bereiche, in denen die Teilkräfte wirken, ergeben sich daher bevorzugt aus einer insbesondere geometrischen Gestalt der Druckkissenanordnung.

Unter der Anordnung es Blasformteils an dem Blasformträgerteil wird verstanden, dass dieses Blasformteil zumindest mittelbar, d. h. ggfs. für weitere Elemente an dem Blasformträgerteil angeordnet ist. Üblicherweise ist das Blasformteil wiederum an einer Blasformträgerschale, im Folgenden auch kurz als Trägerschale angeordnet und diese Trägerschale ist bevorzugt an dem Blasformträgerteil angeordnet, wobei die erwähnte Druckkissenanordnung zwischen dem Blasformträgerteil und der besagten Trägerschale ausgebildet ist. Im Stand der Technik ist üblicherweise zwischen dem Blasformträgerteil und dem Blasformteil lediglich ein einheitliches Druckkissen angeordnet, welches mit Druckluft beaufschlagt werden kann. Entsprechend wirkt eine resultierende Kraft bei Beaufschlagung des Druckkissens nur in eine Richtung, sodass in dieser resultierenden Richtung die Blasform und der Blasformträger auseinandergedrückt werden. Durch diese lediglich eine Kraftwirkung kann es dabei während des Blasvorgangs zu Verspannungen kommen, die sich letztendlich auf die Gestalt des so entstehenden Kunststoffbehältnisses auswirken. Beim dem fließfähigen Medium, mit dem das Druckkissen beaufschlagt wird, handelt es sich insbesondere um ein gasförmiges Medium, bevorzugt um Luft und ggfs. um Sterilluft.

Durch die bevorzugt vorgeschlagene Vorgehensweise wird die Lage und Ausführung des Druckkissens so gestaltet, dass die Verformung im Formträger und in der (Form)trägerschale reduziert wird. Genauer werden die durch das Druckkissen aufgebrachten Kräfte in wenigstens zwei Komponenten aufgeteilt, die unter unterschiedlichen Winkeln auf die Trägerschale bzw. die Blasform wirken, um damit das Risiko von Verspannungen während des Expansionsvorgangs reduzieren. Bei einer vorteilhaften Ausführungsform sind die beiden Teilkräfte unabhängig voneinander und besonders bevorzugt auch - insbesondere hinsichtlich ihrer Größen - unabhängig voneinander einstellbar.

Vorzugsweise wirkt in der Umfangsrichtung zwischen den beiden Bereichen wenigstens abschnittsweise keine Kraft (abgesehen von einer sich aus den Teilkräften vekotriell zusammensetzenden Kraft) oder nur eine gegenüber den Teilkräften erheblich geringere Kraft, welche das Blasformteil und das Blasformträgerteil auseinanderdrängt.

Bei einer vorteilhaften Ausführungsform weist die Vorrichtung zum Umformen von Kunststoffvorformlingen auch eine Beaufschlagungseinrichtung auf, welche die Kunststoffvorformlinge während des Expansionsvorgangs mit einem gasförmigen Medium und insbesondere mit Druckluft beaufschlagt, um diese zu expandieren.

Weiterhin weist die Vorrichtung bevorzugt auch eine Reckstange auf, welche die Kunststoffvorformlinge während des Expansionsvorgangs in deren Längsrichtung dehnt.

Bei einer weiteren vorteilhaften Ausführungsform ist auch eine Verriegelungseinrichtung vorgesehen, welche die Formträgerteile insbesondere während des Expansionsvorgangs miteinander verriegelt. Diese Verriegelung kann dabei kurvengesteuert eingreifen und derart ausgestaltet sein, dass zu Beginn des Expansionsvorgangs und auch im Verlauf des Expansionsvorgangs die beiden Formträgerteile miteinander verriegelt sind. Wie erwähnt, erlaubt die Ausgestaltung mit den zwei Teilkräften ein gleichmäßigeres Andrücken der beiden Blasformteile aneinander.

Bei einer weiteren vorteilhaften Ausführungsform weist die Vorrichtung lediglich eine derartige Druckkissenanordnung an einem der beiden Formträger auf.

Bei einer weiteren vorteilhaften Ausführungsform ist der Winkel zwischen der Richtung der ersten Teilkraft und der Richtung der zweiten Teilkraft zwischen 10° und 170°, bevorzugt zwischen 20° und 160°, bevorzugt zwischen 30° und 150°, bevorzugt zwischen 45° und 135°, bevorzugt zwischen 60° und 120° und besonders bevorzugt zwischen 75° und 105°. Diese Ausgestaltungen der Kraftrichtungen erlauben in besonders vorteilhafter Weise ein günstiges Andrücken der beiden Blasformteile aneinander. Damit ist insbesondere das Druckkissen in einer V-Anordnung angeordnet, sodass die beiden Kräfte in dem besagten Winkel zueinander stehen. Bei einer vorteilhaften Ausführungsform ist die Trägerschale über eine formschlüssige Halterung an dem Blasformträgerteil gehalten, sodass auch eine feste Lage des genannten Druckkissens erreicht wird.

Bei einer weiteren vorteilhaften Ausführungsform weist die Druckkissenanordnung eine erste Druckkisseneinrichtung und eine zweite Druckkisseneinrichtung auf, welche wenigstens teilweise bzw. abschnittsweise voneinander getrennt sind und bevorzugt vollständig voneinander getrennt sind. Durch diese besagten Druckkisseneinrichtungen können die oben erwähnten beiden Kräfte ggfs. auch unabhängig voneinander auf die Blasform bzw. die Trägerschale aufgebracht werden. Es wäre jedoch auch möglich, dass lediglich eine Druckkisseneinrichtung vorgesehen ist, diese aber derart gestaltet wird, dass die beiden oben erwähnten Kräfte entstehen. Dies kann beispielsweise durch einen Steg innerhalb einer einzelnen Druckkisseneinrichtung erreicht werden, der dafür sorgt, dass in Umfangsrichtung der Blasform in einem zentralen Bereich zwischen den beiden erwähnten Teilkräften keine oder nur geringe Kräfte ausgeübt werden.

Unter einer wenigstens teilweisen Trennung der Druckkisseneinrichtungen wird insbesondere verstanden, dass diese Druckkisseneinrichtungen zwar über einen Verbindungsabschnitt miteinander verbunden sein können, sich jedoch dieser Verbindungsabschnitt nicht entlang eines gesamten Seitenrandes wenigstens einer Druckkisseneinrichtung erstreckt sondern lediglich entlang eines Abschnitts eines derartigen Seitenrandes, der bevorzugt kleiner ist als 50% des Seitenrandes, bevorzugt kleiner als 30% des Seitenrandes, bevorzugt kleiner als 20% des Seitenrandes.

Mit anderen Worten sind bei einer abschnittsweisen Trennung die Druckkisseneinrichtungen vorteilhaft lediglich über einen Verbindungsabschnitt miteinander verbunden, der sich auf weniger als 20% des Umfangs wenigstens einer der beiden Druckkisseneinrichtungen erstreckt, bevorzugt auf weniger als 10% des Umfangs, bevorzugt auf weniger als 5% des Umfangs.
Bei einer weiteren vorteilhaften Ausführungsform weist die Vorrichtung eine erste Zuführungseinrichtung auf, um der ersten Druckkisseneinrichtung das fließfähige Medium zuzuführen, so wie eine hiervon getrennte zweite Zuführungseinrichtung, um der zweiten Druckkisseneinrichtung das fließfähige Medium zuzuführen. Auf diese Weise ist eine unterschiedliche Steuerung der beiden Druckkisseneinrichtungen möglich. Auch können die Zuführungskanäle für die beiden Druckkisseneinrichtungen vollständig voneinander getrennt sein, es wäre jedoch auch möglich, dass den beiden Druckkisseneinrichtungen über einen gemeinsamen Anschluss das fließfähige Medium, d. h. die Druckluft zugeführt wird.

Bei einer weiteren vorteilhaften Ausführungsform weist die Druckkissenanordnung eine umlaufende Dichtungseinrichtung auf, welche den mit dem fließfähigen Druckmittel beaufschlagten Raum, d. h. die Druckkammer, abgrenzt, und diese Dichtungseinrichtung liegt an einem ebenen Wandbereich an. Im Stand der Technik werden üblicherweise dreidimensional anliegende Dichtungseinrichtungen verwendet, d. h. insbesondere Dichtungseinrichtungen, welche sich auch entlang eines gekrümmten Abschnitts der Trägerschale bzw. der Blasform oder Blasformträgers erstrecken. In dieser Ausführungsform wird vorgeschlagen, dass sich die Dichtungseinrichtung lediglich entlang einer Ebene d. h. einer geraden Ebene und damit nur im zweidimensionalen Bereich erstreckt. Auf diese Weise ist eine verbesserte Dichtwirkung möglich.

Bei einer weiteren vorteilhaften Ausführungsform ist die Druckkissenanordnung zwischen dem Blasformträgerteil und einer das Blasformteil haltenden Trägerschale angeordnet. Diese Trägerschale kann dabei derart ausgestaltet sein, dass das Blasformteil lösbar von dieser Trägerschale ausgestaltet ist.

Bei einer weiteren vorteilhaften Ausführungsform weist die Vorrichtung eine Halteeinrichtung zum Halten des Blasformteils an dem Blasformträgerteil auf, und diese Halteeinrichtung ist in einer Umfangsrichtung der Blasform zwischen Bereichen der Druckkissenanordnung angeordnet. Bei dieser Ausführungsform wird vorgeschlagen, dass eine bezüglich der Druckkissenanordnung bevorzugt zentrale Anordnung der Halteeinrichtung vorgesehen ist, welche beispielsweise, falls nur eine Druckkisseneinrichtung vorgesehen ist, an einem entsprechenden begrenzenden Steg vorgesehen sein kann.

Bevorzugt ist jedoch die Halteeinrichtung zwischen der ersten Druckkisseneinrichtung und der zweiten Druckkisseneinrichtung angeordnet. Bevorzugt wird in einem Bereich dieser Halteeinrichtung durch das Druckkissen selbst keine Kraft in Richtung der Blasform ausgeübt.

Es wird auch ein vorteilhaftes Verfahren zum Umformen von Kunststoffvorformlingen zu Kunststoffbehältnissen beschrieben, wobei eine Blasform vorgesehen ist, welche zwei bezüglich einander beweglich angeordnete Blasformteile aufweist, welche in einem geschlossenen Zustand der Blasform einen Hohlraum ausbilden, in dessen Inneren die Kunststoffvorformlinge durch Beaufschlagung mit einem fließfähigen Medium und insbesondere mit Druckluft zu den Kunststoffbehältnissen expandiert werden.

Dabei ist das erste Blasformteil an einem ersten Blasformträgerteil angeordnet und das zweite Blasformteil an einem zweiten Blasformträgerteil. Das erste Blasformträgerteil wird gegenüber dem zweiten Blasformträgerteil zum Öffnen und Schließen der Blasform bewegt. Weiterhin ist zwischen wenigstens einem Blasformträgerteil an dem an diesem Blasformträgerteil (zumindest mittelbar) angeordneten Blasformteil eine Druckkissenanordnung angeordnet, wobei eine Druckkammer bzw. eine Druckeinrichtung dieser Druckkissenanordnung mit einem fließfähigen Druckmittel beaufschlagt wird, um durch eine zwischen dem Blasformträgerteil und dem Blasformteil wirkende Kraft das wenigstens eine Blasformträgerteil und das an diesem angeordnete Blasformteil auseinander zu drängen.

Vorteilhaft ist die Druckkissenanordnung derart ausgebildet, dass die zwischen dem Blasformträgerteil und dem Blasformteil wirkende Kraft eine erste Teilkraft aufweist, die in einem ersten vorgegebenen Bereich in der Umfangsrichtung des Blasformteils wirkt, so wie eine zweite Teilkraft, die in einem zweiten vorgegebenen Bereich in der Umfangsrichtung des Blasformteils wirkt, wobei der erste Bereich und der zweite Bereich voneinander beabstandet sind und die Richtungen der ersten Teilkraft und der zweiten Teilkraft in einem von 0 Grad unterschiedlichem Winkel zueinander verlaufen.

Es wird daher auch verfahrensmäßig vorgeschlagen, dass die Druckkissenanordnung so ausgeführt wird, dass wenigstens zwei Teilkräfte vorgesehen sind, welche auf das Blasformteil bzw. eine das Blasformteil haltende Trägerschale wirken.

Bei einem bevorzugten Verfahren wirkt eine zwischen dem Blasformteil und dem Blasformträgerteil wirkende Haltekraft in der Umfangsrichtung der Blasform zwischen der ersten Teilkraft und der zweiten Teilkraft.

Weitere Vorteile und Ausführungsformen ergeben sich aus den beigefügten Zeichnungen. Darin zeigen:
- Fig. 1: eine Behandlungsanlage für Behältnisse nach dem Stand der Technik;
- Fig. 2: eine Darstellung einer Blasstation nach dem Stand der Technik;
- Fig. 3a, b: zwei schematische Darstellungen zur Veranschaulichung der Erfindung;
- Fig. 4: eine erfindungsgemäße Blasstation zum Umformen von Kunststoffvorformlingen zu Kunststoffbehältnissen;
- Fig. 5: eine teilweise Ansicht einer Blasstation zum Umformen von Kunststoffvorformlingen zu Kunststoffbehältnissen;
- Fig. 6: eine Darstellung einer Trägerschale zum Tragen von Blasformen;
- Fig. 7: eine Darstellung eines erfindungsgemäßen Blasformträgerteils;
- Fig. 8: eine Draufsicht auf das in Fig. 7 gezeigte Blasformträgerteil;
- Fig. 9: eine weitere Ansicht eines erfindungsgemäßen Blasformträgerteils;
- Fig. 10: eine erste Darstellung eines Blasformträgerschalenteils;
- Fig. 11: eine vergrößerte Darstellung eines Bereichs des in Fig. 10 gezeigten Blasformträgerschalenteils;
- Fig. 12: eine Darstellung eines Blasformteils;
- Fig. 13: eine vergrößerte Darstellung eines Teils des in Fig. 12 gezeigten Blasformteils;
- Fig. 14.: eine Schnittdarstellung zur Veranschaulichung der Halteeinrichtung;
- Fig. 15: eine Schnittdarstellung der Halteeinrichtung;
- Fig. 16: eine perspektivische Darstellung der Halteeinrichtung; und
- Fig. 17: eine weitere Darstellung eines Blasformteils mit daran angeordnetem Betätigungskörper.

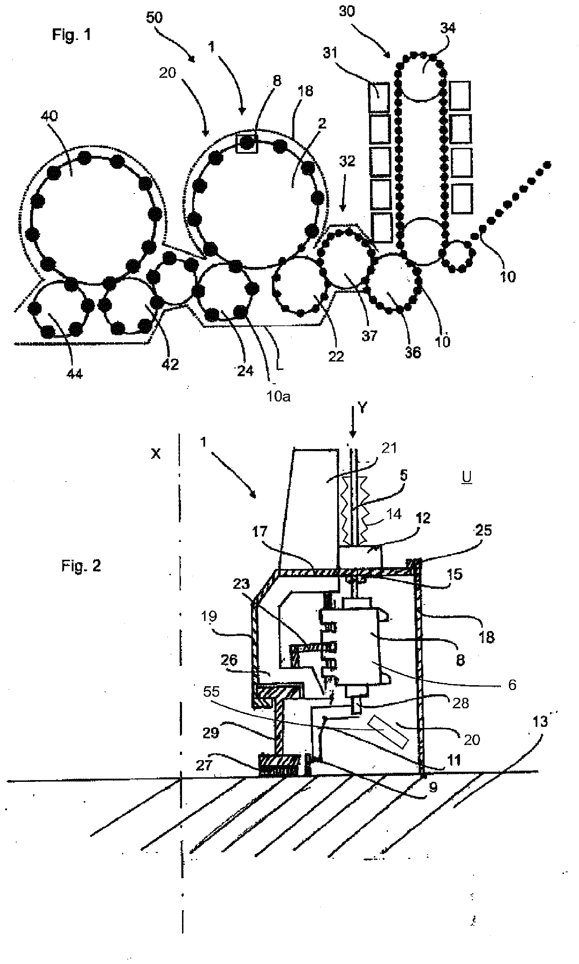

Figur 1 zeigt eine schematische Darstellung einer Anlage zum Herstellen von Kunststoffbehältnissen nach dem Stand der Technik. Diese Anlage 50 weist eine Heizeinrichtung 30 auf, in der Kunststoffvorformlinge 10 erwärmt werden. Dabei werden diese Kunststoffvorformlinge 10 mittels einer Transporteinrichtung 34, wie hier einer umlaufenden Kette, durch diese Heizeinrichtung 30 geführt und dabei mit einer Vielzahl von Heizelementen 31 erwärmt. An diese Heizeinrichtung 30 schließt sich eine Übergabeeinheit 36 an, welche die Vorformlinge 10 an eine Sterilisationseinrichtung 32 übergibt. Diese Sterilisationseinrichtung 32 weist dabei hier ebenfalls ein Transportrad 37 auf und an diesem Transportrad 37 oder auch stationär können Sterilisationselemente angeordnet sein. In diesem Bereich ist beispielsweise eine Sterilisation durch Wasserstoffperoxidgas oder auch durch elektromagnetische Strahlung möglich. Insbesondere wird in diesem Bereich eine Innensterilisation der Vorformlinge durchgeführt.

Das Bezugszeichen 20 bezeichnet in seiner Gesamtheit einen Reinraum, dessen Außenbegrenzungen hier durch die punktierte Linie L angedeutet sind. In einer weiteren bevorzugten Ausführungsform ist der Reinraum 20 nicht nur im Bereich des Transportrads 2 und Befüllungseinrichtung 40 angeordnet, sondern beginnt möglicherweise schon im Bereich der Heizeinrichtung 30, der Sterilisationseinrichtung 32, der Kunststoffvorformlingzuführung und/oder der Kunststoffvorformlingherstellung. Man erkennt, dass dieser Reinraum 20 in dem Bereich der Sterilisationseinheit 32 beginnt. In diesem Bereich können Schleuseneinrichtungen vorgesehen sein, um die Kunststoffvorformlinge in den Reinraum 20 einzuführen, ohne dass dabei zu viel Gas innerhalb des Reinraums strömt und so verloren geht.

Der Reinraum ist, wie durch die gestrichelte Linie L angedeutet, an die Außengestalt der einzelnen Anlagenkomponenten angepasst. Auf diese Weise kann das Volumen des Reinraums reduziert werden.

Das Bezugszeichen 1 bezeichnet in ihrer Gesamtheit eine Umformungsvorrichtung, bei der an einem Transportrad 2 eine Vielzahl von Blasstationen bzw. Umformungsstationen 8 angeordnet ist, wobei hier lediglich einer dieser Blasstationen 8 dargestellt ist. Mit diesen Blasstationen 8 werden die Kunststoffvorformlinge 10 zu Behältnissen 10a expandiert. Obwohl hier nicht detailliert gezeigt, befindet sich nicht der gesamte Bereich des Transporteinrichtung 2 innerhalb des Reinraums 20, sondern der Reinraum 20 bzw. Isolator ist gewissermaßen als Mini-Isolator innerhalb der gesamten Vorrichtung realisiert. So wäre es möglich, dass der Reinraum zumindest im Bereich der Umformungsvorrichtung 1 kanalartig ausgeführt ist.

Das Bezugszeichen 22 bezieht sich auf eine Zuführeinrichtung, welche die Vorformlinge an die Umformungseinrichtung 1 übergibt und das Bezugszeichen 24 auf eine Abführeinrichtung, welche die hergestellten Kunststoffbehältnisse 20 von der Umformungsvorrichtung 1 abführt. Man erkennt, dass der Reinraum 20 in dem Bereich der Zuführeinrichtung 22 und der Abführeinrichtung 24 jeweils Ausnehmungen aufweist, welche diese Einrichtungen 22, 24 aufnehmen. Auf diese Weise kann in besonders vorteilhafter Weise eine Übergabe der Kunststoffvorformlinge 10 an die Umformungsvorrichtung 1 bzw. eine Übernahme der Kunststoffbehältnisse 10a von der Umformungsvorrichtung 1 erreicht werden.

Mit einer Übergabeeinheit 42 werden die expandierten Kunststoffbehältnisse an eine Befüllungseinrichtung 40 übergeben und von dieser Befüllungseinrichtung 40 anschließend über eine weitere Transporteinheit 44 abgeführt. Dabei befindet sich auch die Befüllungseinrichtung 40 innerhalb des besagten Reinraums 20. Auch im Falle der Befüllungseinrichtung wäre es möglich, dass nicht die gesamte Befüllungseinrichtung 40 mit beispielsweise einem Reservoir für ein Getränk vollständig innerhalb des Reinraums 6 angeordnet sind, sondern auch hier lediglich diejenigen Bereiche, in denen tatsächlich die Behältnisse geführt werden. Insoweit könnte auch die Befüllungseinrichtung in ähnlicher Weise aufgebaut sein wie die Vorrichtung 1 zum Umformen von Kunststoffvorformlingen 10.

Wie erwähnt, ist der Reinraum 20 im Bereich der Vorrichtung 1 auf einen geringst möglichen Bereich reduziert, nämlich im Wesentlichen auf die Blasstationen 8 selbst. Durch diese kleinbauende Gestaltung des Reinraums 20 ist es leichter und schneller möglich, einen Reinraum überhaupt herzustellen und auch die Sterilhaltung in der Betriebsphase ist weniger aufwändig. Auch wird weniger Sterilluft benötigt, was zu kleineren Filteranlagen führt und auch die Gefahr von unkontrollierter Wirbelbildung wird reduziert.

Figur 2 zeigt eine Detaildarstellung der Vorrichtung 1 im Bereich einer Blasstation 8. Eine Vielzahl derartiger Blasstationen 8 wird mit einer Transporteinrichtung 2 bzw. einem Träger drehend um eine Achse X bewegt. Die Blasstation 8 ist, wie in Figur 2 ersichtlich, innerhalb des Reinraums 20, der hier kanalartig ausgebildet ist, geführt. Dieser Reinraum 20 wird abgeschlossen durch eine bewegliche Seitenwand 19 und einen einteilig mit dieser Seitenwand 19 ausgebildeten Deckel 17. Diese Seitenwand 19 und der Deckel 17 drehen dabei mit der Blasstation 8 mit.

Das Bezugszeichen 18 bezieht sich auf eine weitere Wandung, welche den Reinraum 16 begrenzt. Diese Wandung 18 ist hier eine außen liegende Wandung, welche stationär angeordnet ist. Zwischen dem Deckel 17 und der Wandung 18 ist eine Dichtungseinrichtung 25 vorgesehen, welche die gegeneinander beweglichen Elemente 17 und 18 gegeneinander abdichtet, beispielsweise, wie oben erwähnt, unter Verwendung eines Wasserschlosses. Der untere Bereich der Wandung 18 ist fest und abdichtend an einem Boden 13 angeordnet. Innerhalb des Reinraums 20 und hier unmittelbar an der Wandung 19 anliegend ist ein Träger 26 vorgesehen, der sich ebenfalls drehend bewegt und an dem wiederum eine Halteeinrichtung 23 vorgesehen ist, welche die Blasstation 8 hält.

Das Bezugszeichen 11 bezieht sich auf eine Folgeeinrichtung, welche von einer Führungskurve 9 betätigt werden kann, um die Blasstation auf ihrem Weg durch den Reinraum 6 zu öffnen und zu schließen, um insbesondere den Kunststoffvorformling in die Blasstation einzulegen und um ihn auch wieder zu entnehmen. Dabei ist eine Führungskurve 9 auch innerhalb des Reinraums 20 angeordnet. Es wäre jedoch beispielsweise auch möglich, etwa bereits einen Abschnitt 11 unterhalb der einzelnen Blasstationen 8 aus dem Reinraum 20 herauszuführen.

Die Transporteinrichtung 2 kann noch weitere Elemente aufweisen, welche oberhalb des Reinraums 20 angeordnet sind.

Der Träger 26 ist dabei fest auf einem Haltekörper 29 angeordnet und dieser Haltekörper ist wiederum beweglich gegenüber dem Boden 13. Dabei bezieht sich das Bezugszeichen 27 auf eine weitere Dichtungseinrichtung, welche auch in diesem Bereich eine Abdichtung der gegeneinander beweglichen Bereiche 13 und 29 bewirkt.

Das Bezugszeichen 5 bezieht sich auf eine Reckstange, welche gegenüber der Blasstation beweglich ist, um die Kunststoffvorformlinge 10 in ihrer Längsrichtung zu recken. Dabei ist auf dem Deckel 17 hier ein Schlitten 12 angeordnet, demgegenüber die Reckstange in der Richtung Y beweglich ist. Das Bezugszeichen 21 bezieht sich auf eine weitere Halterung für diesen Schlitten 12 der Reckstange 5.

Man erkennt, dass bestimmte Bereiche der Reckstange während des Blasvorgangs sowohl außerhalb des Reinraums 20 als auch innerhalb des Reinraums 20 sind. Zu diesem Zweck ist es möglich, außerhalb des Reinraums 20 bzw. oberhalb des Schlittens 12 eine Schutzeinrichtung wie einen Faltenbalg vorzusehen, der die Reckstange 5 umgibt, so dass kein Bereich der Reckstange 5 unmittelbar mit der Außenumgebung in Berührung kommt. Das Bezugszeichen U kennzeichnet die (unsterile) Umgebung des Reinraums 20. Das Bezugszeichen 28 kennzeichnet einen Träger zum Tragen einer Bodenform, welche ebenfalls einen Bestandteil der Blasform 4 ausbildet. Dieser Träger ist dabei ebenfalls in der Richtung Y bewegbar.

Das Bezugszeichen 55 bezieht sich auf eine Sterilisationseinrichtung, welche hier bevorzugt im Inneren des Reinraums 20 angeordnet ist und zum Sterilisieren der einzelnen Umformungsstationen bzw. Bestandteilen dieser Umformungsstationen 8 dient. Diese Sterilisationseinrichtung 55 kann dabei die Umformungsstationen 8 beispielsweise mit Wasserstoffperoxid oder einem anderen Sterilisationsmittel beaufschlagen. Dabei kann die Sterilisationseinrichtung 55 stationär angeordnet sein und die Umformungsstationen können sich gegenüber dieser Sterilisationseinrichtung 55 bewegen. Diese Sterilisationseinrichtung bzw. Beaufschlagungseinrichtung 55 kann sich am Transportrad 2 oder an der stehenden Wandung 18 befinden oder generell stationär angeordnet sein und aus Düsen o ähnlichem bestehen. Zudem ist es vorteilhaft, Sterilluft zum Sterilisieren des Reinraums 20 über das Lüftungssystem in den Reinraum 20 einzubringen.

Die (nicht gezeigten) Blasformen sind innerhalb der Blasformträger 6 angeordnet. Genauer können dabei zwei Blasformträgerteile angeordnet sein, die gegenüber einander schwenkbar sind und jeweils ein Blasformteil halten. Durch diesen Schwenkvorgang können die Blasformen zum Einbringen von Kunststoffvorformlingen und zum Entnehmen fertig geblasener Behältnisse geöffnet werden. Diese Blasformträger und Blasformen sind dabei ebenfalls innerhalb des Reinraums angeordnet.

Es wäre jedoch auch (anders als in Fig. 2 gezeigt) möglich und bevorzugt, dass die Transporteinrichtung 2 bzw. der Träger einen C-förmigen Außenumfang aufweist, der auch teilweise die Außenwandungen des Reinraums ausbildet. Damit dreht sich hier diese C - förmige Reinraumwand mit der Transporteinrichtung 2 d.h. dem Blasrad. Bei dieser Ausführungsform ist die untere Begrenzung des Reinraums von dem Boden 13 beabstandet und bewegt sich relativ zu dem Boden. Auf diese Weise kann der Reinraum noch kleiner gestaltet werden als in Fig.2 gezeigt. Eine Abdichtung dieses C- förmigen Profils der Transporteinrichtung, welches hier sowohl eine Innenwandung als auch eine untere und obere Abdeckung des Reinraums ausbildet, findet hier bevorzugt nur gegenüber der Außenwandung des Reinraums statt. Diese Außenwandung ist dabei vorteilhaft stationär angeordnet.

Die in den Figuren 1 und 2 gezeigte Anordnung bezieht sich auf eine sterile Blasformanordnung. Die vorliegende Erfindung ist jedoch ebenso bei herkömmlichen bzw. unsterilen Blasformmaschinen anwendbar. Auch das in Figur 1 gezeigte Anlagenkonzept ist sowohl für sterile als auch für nicht sterile Maschinen anwendbar.

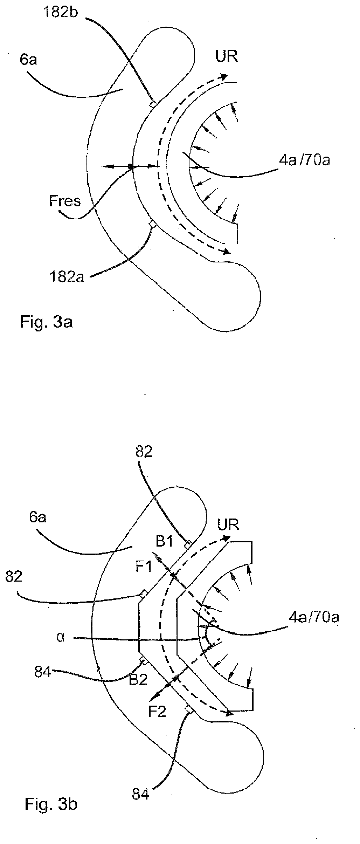

Die Fig. 3a und 3b zeigen zwei schematische Darstellungen zur Veranschaulichung des der Erfindung zugrundeliegenden Problems und dessen Lösung. Fig. 3a zeigt die Verhältnisse nach dem Stand der Technik Dabei ist hier ein Blasformträgerteil 6a vorgesehen, an dem eine Blasform 4a (ggfs. über eine Trägerschale) angeordnet ist.. Es wäre jedoch auch denkbar, die Blasformen direkt an dem Träger zu befestigen. Zwischen dem Blasformträger 6a und der Blasform 4a ist ein in der Umfangsrichtung UR vorgesehenes Druckkissen angeordnet, welches zwischen den beiden Dichtungsabschnitten 182a und 182b ausgebildet ist. Dieses Druckkissen erzeugt damit eine resultierende Kraft Fres, die hier horizontal wirkt. Die kleinen Kraftpfeile im Inneren der Blasformen beziehen sich auf die Kräfte, welche durch den eigentlichen Blasvorgang entstehen. Dies bedeutet, dass es auf diese Weise zu Verspannungen und auch zu Verformungen der Blasform oder auch der Blasformträgerschale kommen kann.

Fig. 3b zeigt eine erfindungsgemäße Ausgestaltung. Im Gegensatz zum Stand der Technik sind hier zwei durch die umlaufenden Dichtungen 82, 84 voneinander beabstandete Druckkissen vorgesehen, die hier Teilkräfte F1 und F2, die in dem vorgegebenen Winkel zueinander angeordnet sind, auf die Blasform 4a bzw. die Trägerschale für die Blasform ausüben. Die Bezugszeichen 82, 84 kennzeichnen damit Dichtungseinrichtungen, welche die beiden Druckkissen umgeben bzw. ausbilden. Durch die Wirkung mit zwei Teilkräften F1 und F2 kann eine insgesamt gleichmäßigere Kraftwirkung auf die Blasform 4a bzw. die Trägerschale ausgeübt werden. Diese beiden Bereiche B1 und B2 in denen die Teilkräfte wirken, sind hier in der Umfangsrichtung UR der Blasform voneinander beabstandet. Der Winkel a, unter dem die beiden Kräfte F1 und F2 zueinander verlaufen, liegt vorteilhaft in einem Bereich zwischen 70° und 110°.

Die Umfangsrichtung ist vorteilhaft auch eine Umfangsrichtung des zu expandierenden Kunststoffvorformlings bzw. Behältnisses. Der erwähnte Winkel α wird vorteilhaft in einer durch die Umfangsrichtung gebildeten Ebene gebildet. Diese Ebene steht dabei vorteilhaft zu einer Längsrichtung des Kunststoffvorformlings senkrecht und ist vorteilhaft parallel zu der Figurenebene von Fig. 3b

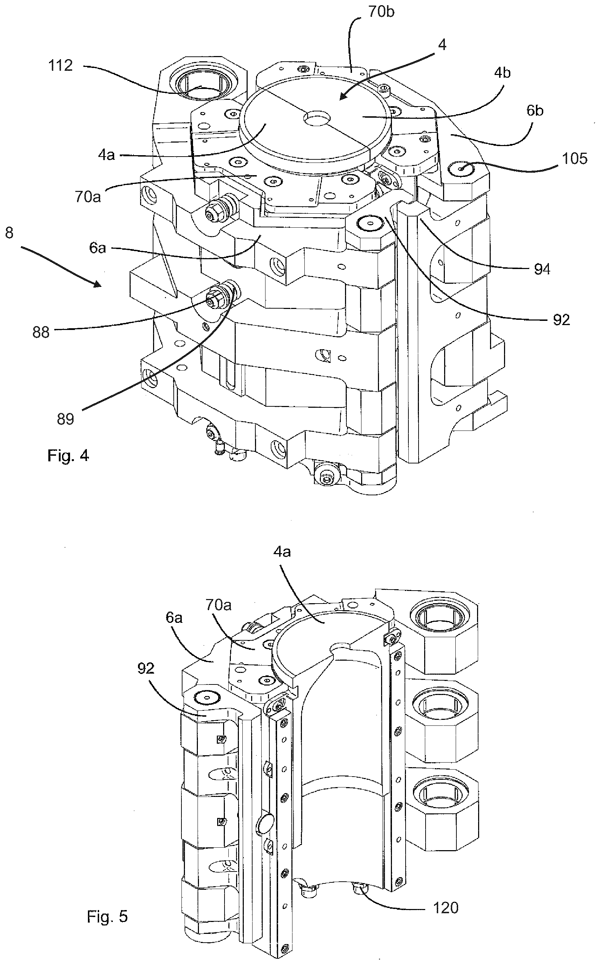

Fig. 4 zeigt eine perspektivische Darstellung einer erfindungsgemäßen Blasstation 8. Diese Blasstation 8 weist dabei zwei Blasformteile 4a, 4b auf, die hier in einem geschlossenen Zustand dargestellt sind. Zwischen diesen beiden Blasformteilen 4a, 4b wird der oben erwähnte Hohlraum ausgebildet, innerhalb dessen die Kunststoffvorformlinge zu den Kunststoffbehältnissen expandiert werden.

Das Blasformteil 4a und entsprechend auch das Blasformteil 4b sind hier an Blasformträgerschalenteilen 70a, 70b fest angeordnet, beispielsweise verklemmt oder verschraubt. Diese Blasformträgerschalen 70a, 70b sind wiederum sind wiederum an Blasformträgerteilen 6a und 6b angeordnet. Diese Blasformträgerteile sind bezüglich einer gemeinsamen Schwenkachse 112 schwenkbar, um die Blasform zu öffnen und zu schließen.

Das Bezugszeichen 92 bezieht sich auf ein erstes Verriegelungselement, in welches ein zweites Verriegelungselement 94 zum Verriegeln der Blasform während des Expansionsvorgangs eingreift. Zu diesem Zweck ist dieses zweite Verriegelungselement 94 bezüglich einer Schwenkwelle 105 schwenkbar.

Das Bezugszeichen 88 bezieht sich auf Befestigungsmittel bzw. Halteeinrichtungen, welche zum Befestigen der Blasformträgerschalen 70a und 70b an den jeweiligen Blasformträgerteilen 6a, 6b dienen.

Über Zuführungen 108 wird die Druckluft zum Betreiben des Druckkissens zur Verfügung gestellt. Das Bezugszeichen 110 kennzeichnet ein Verriegelungselement, welches zum schnellen Ver- und Entriegeln der Blasformträgerschalen 55a und 55b gegenüber dem zugehörigen Blasformträgerteilen 6a und 6b dient.

Fig. 5 zeigt eine Teildarstellung der in Fig. 4 gezeigten Vorrichtung, d. h. ein Blasformträgerteil 6a mit dem darin angeordneten Blasträgerschalenteil und dem Blasformteil 4a. Auch erkennt man hier einen Anschluss 120, über den dem Blasformteil 4a ein Temperiermedium, beispielsweise eine erwärmte Flüssigkeit, zugeführt werden kann.

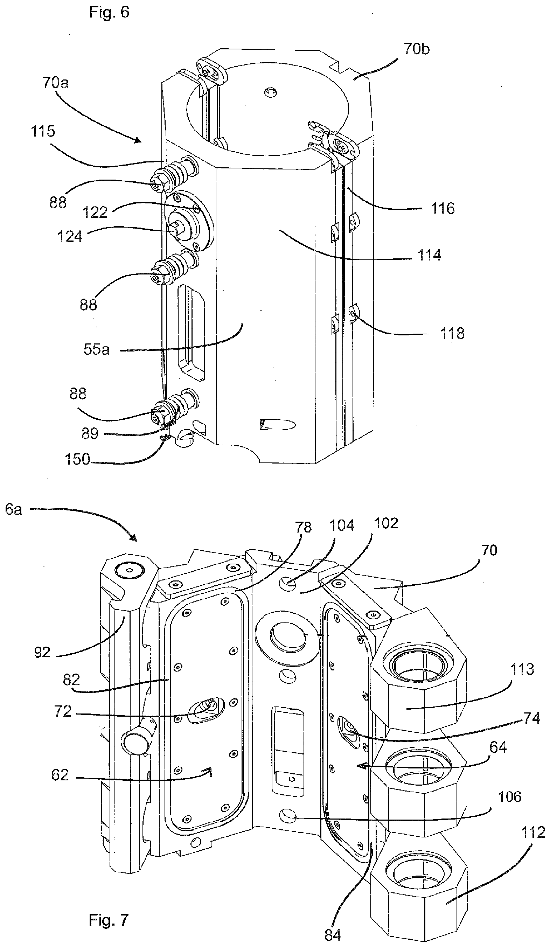

Fig. 6 zeigt eine Darstellung der Blasformträgerschalen 70a, 70b. Man erkennt, das diese hier einen polygonalen Außenumfang aufweisen, d. h. beide Trägerschalenteile 70a und 70b weisen an ihren Außenflächen jeweils vier Kanten auf. Die Bezugszeichen 114 und 115 beziehen sich auf Flächen der Blasformträgerschalen, die im Betrieb von dem (nicht gezeigten) Druckkissen belastet werden. Die entsprechenden durch die Druckkissen aufgebrachten Kräfte wirken hier im Wesentlichen senkrecht zu den beiden Flächen 114 und 115. Die Druckkissen werden daher auch durch die Flächen 114, 115 bzw. Abschnitte dieser Flächen begrenzt. Die Flächen sind hier eben bzw. zweidimensional. Die Dichtungseinrichtungen 82 und 84 liegen an diesen Flächen an.

Das Bezugszeichen 116 bezieht sich auf ein Halteelement, mit dem die Blasformteile (nicht gezeigt) an den Blasformträgerschalen 70a, 70b gehalten werden. Das Bezugszeichen 118 kennzeichnet ein Eingriffsmittel, wie eine Pratze, welche die Blasformteile in einem geschlossenen Zustand hält. Vorteilhaft ist dabei dieses Eingriffsmittel schwenkbar, sodass über diesen Schwenkvorgang die Blasformteile von den Trägerschalen entkoppelt werden können.

Man erkennt hier ebenfalls wieder die Befestigungsmittel 88, mit denen die Blasformträgerschalen an den Blasformträgern angeordnet werden können. Diese Befestigungseinrichtungen sind hier zwischen den beiden Flächen 115 und 114 angeordnet und damit zwischen denjenigen Bereichen, in denen im Betrieb die jeweiligen Teilkräfte F1 und F2 anliegen. An dem zweiten Blasformschalenteil 70b liegt im Betrieb kein Druckkissen an, d. h. das Druckkissen liegt hier nur an einem der beiden Blasformschalenteilen an. Dies ist jedoch auch ausreichend, um die beiden Blasformteile aufeinander zuzudrängen.

Fig. 7 zeigt eine weitere Darstellung eines Blasformträgerteils 6a. Hier erkennt man die Dichtungseinrichtungen 82, 84, welche hier jeweils die beiden Druckkisseneinrichtungen 62, 64 ausbilden bzw. begrenzen. Das Bezugszeichen 102 kennzeichnet wiederum den Bereich der zwischen diesen beiden Druckkissen angeordnet ist und der zum Befestigen der Formträgerschalenteils an dem Blasformträgerteil 6a dient. Die Dichtungseinrichtungen 82, 84 sind hier, wie oben erwähnt, in einem ebenen Bereich angeordnet und damit zweidimensional ausgebildet, was leichter zu bewerkstelligen ist als ein dreidimensionaler Verlauf, der sich beispielsweise an einer gekrümmten Wandung erstreckt.

Die Bezugszeichen 72, 74 kennzeichnen jeweils Zuführeinrichtungen, mittels denen der Bereich, der von der Dichtungseinrichtung 82 umgeben ist, und der damit die Druckkissen 62, 64 ausbildet, mit Druckluft beaufschlagt wird, um so das Blasformträgerschalenteil und das Blasformträgerteil 6a auseinander zu drücken. Die Bezugszeichen 104 und 106 beziehen sich auf Durchgangsöffnungen, durch welche hindurch die Befestigungsmittel 88 führbar sind. Das Bezugszeichen 113 kennzeichnet wiederum eine Aufhängung, an der das Blasformträgerteil 6a angelenkt ist, um auf diese Weise schwenkbar zu sein. Die Befestigungsmittel können Federeinrichtungen 89 aufweisen, welche eine Spannkraft bewirken, welche die Formträgerschale 70a und das Blasformträgerteil 6a zusammenziehen

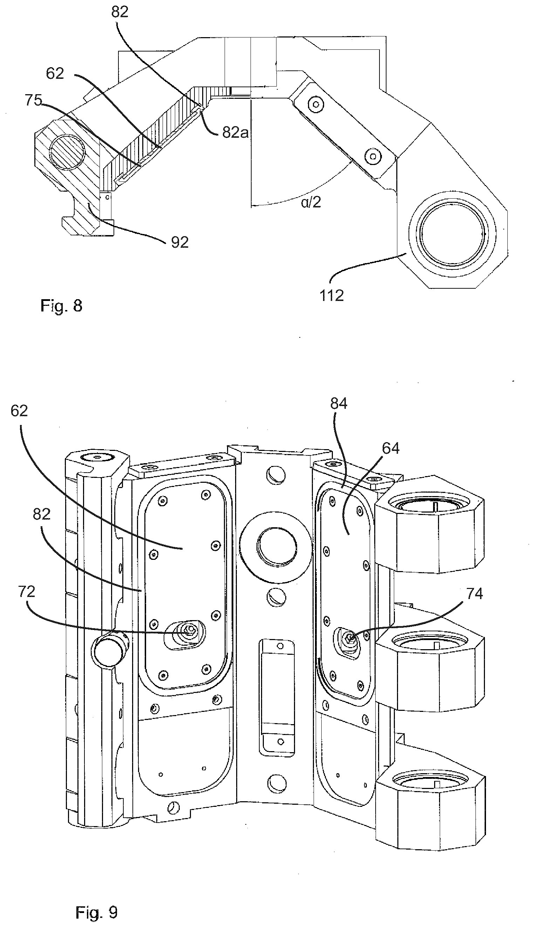

Fig. 8 zeigt eine Draufsicht auf die in Fig. 7 gezeigte Vorrichtung. Das Bezugszeichen 82 kennzeichnet wiederum die Dichtungseinrichtung und das Bezugszeichen 75 eine Halteeinrichtung, durch welche die Dichtungseinrichtung an dem Blasformträgerteil gehalten wird. Bei dieser Halteeinrichtung 75 kann es sich beispielsweise um eine Platte handeln, die durch eine oder mehrere Schrauben an dem Blasformträgerteil 6a angeschraubt ist und welche einen Abschnitt der umlaufenden Dichtungseinrichtung 82 einklemmt. Ein (ebenfalls umlaufender) Abschnitt 82a der Dichtungseinrichtung 82 liegt an der (nicht gezeigten) Blasformträgerschale an. Die Dichtungseinrichtungen sind vorteilhaft aus einem Elastomer hergestellt und verlaufen bevorzugt in einer Ebene.

Das Bezugszeichen a/2 kennzeichnet den Winkel, der zwischen dem rechten Druckkissen und einer Mittelsenkrechten gebildet wird. Der Gesamtwinkel zwischen diesen beiden Druckwinkeln entspricht demnach dem des Winkels a.

Damit wurden hier die Druckkissen in zwei gleiche Teile aufgeteilt und in eine V-förmige Anordnung unter einem optimalen Winkel gebracht. Die oben erwähnte formschlüssige Halterung bzw. die Befestigungsmittel 88 sorgen zudem für eine feste Lage der nun vereinfachten zweidimensionalen Dichtung 82. Genauer gesagt kann diese feste Lage durch die Halteeinrichtung 75, bei der es sich beispielsweise um eine Platte handeln kann, erzeugt werden.

Fig. 9 zeigt eine weitere Ausführungsform der erfindungsgemäßen Vorrichtung. Man erkennt, dass hier der von der Dichtungseinrichtung 82 umgebene Bereich verkleinert ist und damit auch das Druckkissen 62 verkleinert ist. Damit wurde hier die Druckkissenfläche durch den Wechsel der Dichtungseinrichtung 82 verändert und auf diese Weise ist es möglich, die Lage der Krafteinwirkung auf die Blasformträgerschalen und auch die Größe der Kraft gezielt zu steuern. Falls gewünscht, könnten durch die jeweiligen Druckkisseneinrichtungen 62 auch Stege verlaufen, um die Kräfte noch weiter aufzuspalten.

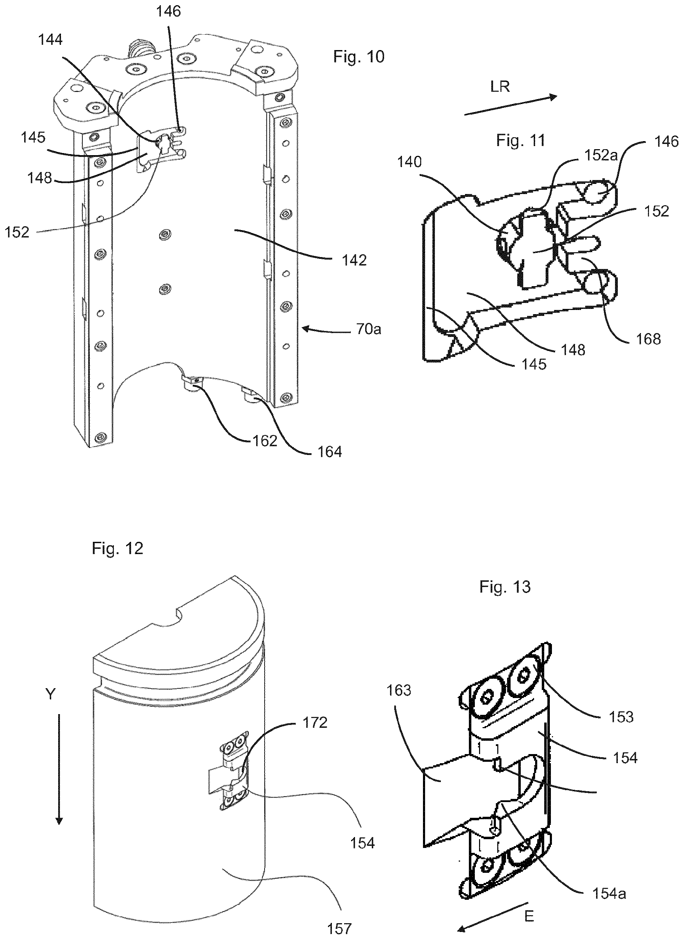

Fig. 10 zeigt eine Darstellung eines Blasformträgerschalenteils 70a. Dieses Blasformträgerschalenteil 70a dient zur Aufnahme eines Blasformteils. Dazu weist das Blasformträgerschalenteil 70a eine Innenwandung 142 auf, in der eine (nur teilweise) sichtbare Öffnung 144 angeordnet ist. Durch diese Öffnung 144 erstreckt sich ein ebenfalls nur teilweise sichtbarer Betätigungskörper 140, an dem ein erstes Halteelement 152 angeordnet ist. Dabei ist die besagte Öffnung 144 innerhalb einer Ausnehmung 148 ausgebildet. Das Bezugszeichen 145 kennzeichnet eine Schrägfläche, die ein Einführen eines Blasformteils, wie in Fig. 12 gezeigt, erleichtert. Die Bezugszeichen 162 und 164 kennzeichnen Anschlüsse, um dem Blasformträgerschalenteil ein Temperiermittel zuzuführen. Der Betätigungskörper 140 kann über den in Fig. 6 gezeigten Pneumatikanschluss 150 mit einem Pneumatikmittel, beispielsweise mit Druckluft, bewegt werden.

Fig. 11 zeigt eine vergrößerte Darstellung des Kopplungsbereiches in der Ausnehmung 148. Man erkennt, dass das Halteelement 152 einen halbkreisförmigen bzw. V-förmigen Querschnitt 152a aufweist, mit dem es hinter den Vorsprung 154a des in Fig. 13 gezeigten zweiten Halteelements 154 eingreifen kann. Weiterhin ist eine Nase bzw. ein Vorsprung 168 vorgesehen, der in eine entsprechende Ausnehmung 172, die an dem Blasformteil 4a angeordnet ist, eingreift, um das Blasformträgerteil zu Zentrieren. Der Anschlag 146 dient weiterhin zum korrekten Positionieren des Blasformteils 4a in der Blasformträgerschale 70a. Auf diese Weise wird ein Verschieben des Blasformteils 4a gegenüber dem Blasformträgerschalenteil 70a in der Längsrichtung LR verhindert.

Fig. 12 zeigt eine Darstellung eines Blasformteils 4a. Dieses Blasformteil weist hier das zweite Halteelement 154 auf, welches mit dem ersten Halteelement 152 zusammenwirkt. Das Bezugszeichen 157 bezieht sich auf eine Umfangswandung des Blasformteils 4a, welche in einem montierten Zustand an der Wandung 142 des Blasformträgerschalenteils anliegt. Durch diesen flächigen Kontakt zwischen den Wandungen 142 und 157 wird auch ein Wärmeübertrag ermöglicht, sodass mit Hilfe der Temperieranschlüsse 162 und 164 indirekt auch das Blasformteil 4a selbst temperiert werden kann.

Das Halteelement 154 weist einen Vorsprung 154a auf, der in einem montierten Zustand Blasformteils einem Blasformträgerschalenteil dazu dient, dass das feste Halteelement 152 nicht mehr gegenüber dem zweiten Halteelement 154 verschoben werden kann. Weiterhin erkennt man, dass das zweite Halteelement 154 vorstehend bezüglich der Wandung 157 ausgebildet ist. Das erste Halteelement 152 kann damit in das zweite Halteelement 154 einrasten. Die Bezugszeichen 153 beziehen sich auf Befestigungsmittel, wie beispielsweise Schrauben, welche hier bezüglich der Wandung 157 versenkt sind und mit welchen das Halteelement 154 an dem Blasformteil 4a angeordnet ist. Das Bezugszeichen 163 kennzeichnet eine weitere Ausnehmung in der Wandung 157, welche ein Einführen des ersten Halteelements 152 in das zweite Halteelement 154 erleichtert.

Die Ausnehmung 163 erstreckt sich zumindest auch in der Richtung E, in der während der Montage das Blasformteil gegenüber dem Blasformträgerschalenteil 70a bewegt bzw. gedreht wird, d.h. insbesondere in einer Umfangsrichtung des Blasformteils 4a.

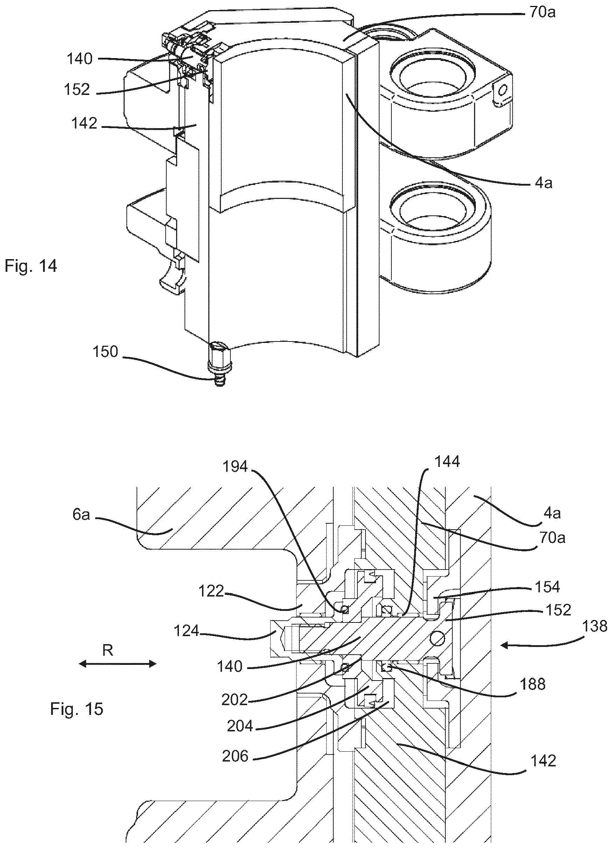

Fig. 14 zeigt eine Schnittdarstellung eines an dem Blasformträgerschalenteil 70a montierten Blasformteils 4a, wobei auch die insgesamt mit 138 gekennzeichnete Halteeinrichtung erkennbar ist. Im einzelnen erkennt man den gegenüber dem Blasformträgerschalenteil 70a bewegbaren Betätigungskörper 140, der zum Spannen des Blasformteils 4a an dem Blasformträgerschalenteil 70a dient. Man erkennt, dass sich der Betätigungskörper (140) durch die Wandung 142 des Blasformterägerschalenteils 70a erstreckt. Daneben ist auch das erste Halteelement 152 erkennbar, welches das an dem Blasformteil angeordnete zweite Halteelement hintergreift. Das Bezugszeichen 6a bezieht sich auf das Blasformträgerteil, an dem das Blasformträgerschalenteil 70a angeordnet ist. Bestandteile der Halteeinrichtung 138 erstrecken sich dabei auch durch eine Wandung des Blasformträgerteils 6a, genauer durch die in Fig. 7 gezeigte Öffnung 104.

Fig. 15 zeigt eine Schnittdarstellung einer Halteeinrichtung 138. Der Betätigungskörper 140 ist dabei in der Richtung R beweglich, wobei diese Richtung auch einer radiale Richtung der Blasformen bzw. auch des zu expandierenden Behältnisses darstellt. Der Betätigungskörper 140 wird dabei von der Wandung 142, durch die er sich hindurch erstreckt, geführt. Das Bezugszeichen 188 bezieht sich auf eine Dichtungseinrichtung. An dem Betätigungskörper 140 ist ein Kolbenelement 204 angeordnet und auch fixiert.

Das Kolbenelement 204 ist gegenüber einem Kolbenraum 206 in der Richtung R beweglich angeordnet. Man erkennt, dass das erste Halteelement 152, welches hier einteilig mit dem Betätigungskörper 140 ausgebildet ist, das zweite Halteelement 154 hintergreift. Das zweite Halteelement 154 ragt dabei in die Ausnehmung 148, welche in der Wandung 142 ausgebildet ist, hinein. Das Bezugszeichen 202 bezieht sich auf eine an dem Betätigungselement 146 ausgebildete Stufe, gegenüber der sich das Kolbenelement 204 abstützt.

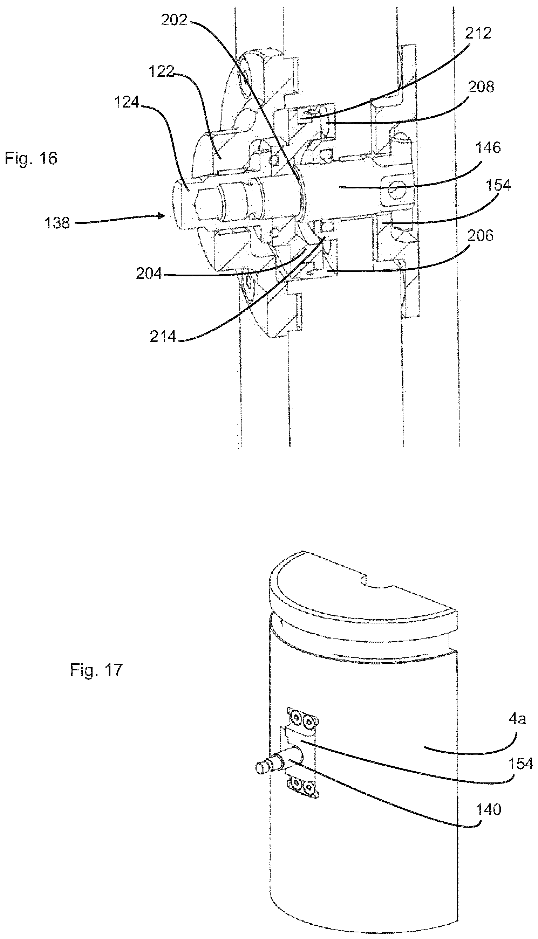

Fig. 16 zeigt eine perspektivische Darstellung der Halteinrichtung 138. Über Öffnungen 208 kann dem Kolbenraum 206 ein Pneumatikmedium, z.B. Druckluft zugeführt werden. Hierdurch wird das Kolbenelement 204 und mit diesem der Betätigungskörper 140 nach links gedrängt und damit das Blasformteil 4a an das Blasformträgerschalenteil 70a herangezogen. Das Bezugszeichen 212 bezieht sich auf eine umlaufende Dichtungseinrichtung, welche den Kolbenraum 206 abdichtet. Ein Endabschnitt des Betätigungskörpers 140 erstreckt sich in einen Hülsenkörper 124. Dabei ist dieser Hülsenkörper 124 in der Richtung R fest an dem Betätigungskörper 140 angeordnet. Das Bezugszeichen 122 kennzeichnet eine Abdeckeinrichtung, die an dem Blasformträgerschalenteil 70a angeschraubt ist und die Halteeinrichtung 138 abdeckt. Der Hülsenkörper erstreckt sich durch diese Abdeckeinrichtung 122 hindurch.

Es wäre weiterhin denkbar, ein Federungselement vorzusehen, welches den Betätigungskörper 140 in der Richtung R oder einer hierzu entgegengesetzten Richtung vorspannt. Das Bezugszeichen 214 bezieht sich auf einen Kolbenteller.

Fig. 17 zeigt eine weitere Darstellung eines Blasformteils, an dem zur Veranschaulichung der Betätigungskörper 140 angeordnet ist, wobei dessen (nicht sichtbares) Halteelement das zweite Halteelement 154 hintergreift.

### Bezugszeichenliste

- 1: Umformungsvorrichtung
- 2: Transportrad, Transporteinrichtung
- 4: Blasform
- 4a, b: Blasformteile
- 5: Reckstange
- 6: Blasformträger
- 6a, b: Blasformträgerteile
- 8: Umformungsstationen, Blasstationen
- 9: Führungskurve
- 10: Kunststoffvorformlinge
- 10a: Behältnisse
- 11: Folgeeinrichtung, Abschnitt
- 12: Schlitten
- 13: Boden
- 17: Deckel
- 18: Wandung
- 19: bewegliche Seitenwand
- 20: Reinraum
- 21: Halterung
- 22: Zuführeinrichtung
- 23: Halteeinrichtung
- 24: Abführeinrichtung
- 25: Dichtungseinrichtung
- 26: Träger
- 27: Dichtungseinrichtung
- 28: Träger
- 29: Haltekörper
- 30: Heizeinrichtung
- 31: Heizelemente
- 32: Sterilisationseinrichtung
- 34: Transporteinrichtung
- 36: Übergabeeinheit
- 37: Transportrad
- 40: Befüllungseinrichtung
- 42: Übergabeeinheit
- 44: Transporteinheit
- 50: Anlage
- 55: Sterilisationseinrichtung
- 62, 64: Druckkisseneinrichtungen
- 70a, b: Blasformträgerschalenteile
- 74: Zuführeinrichtungen
- 75: Halteeinrichtung
- 82, 84: Dichtungseinrichtungen
- 82a: Dichtungsabschnitt
- 88: Halteeinrichtung, Befestigungsmittel
- 92: Verriegelungselement
- 94: Verriegelungselement
- 102: Bereich zwischen den Druckkissen
- 104: Öffnung
- 105: Schwenkwelle
- 106: Durchgangsöffnungen
- 108: Zuführungen
- 110: Verriegelungselement
- 112: Schwenkachse
- 113: Aufhängung
- 114, 115: Flächen der Blasformträgerschalen
- 116: Halteelement
- 118: Eingriffsmittel
- 122: Abdeckeinrichtung
- 124: Hülsenkörper
- 138: Halteeinrichtung
- 140: Betätigungskörper
- 142: (Innen)wandung
- 144: Öffnung
- 146: Anschlag
- 145: Schrägfläche
- 148: Ausnehmung
- 150: Pneumatikanschluß
- 152: erstes Halteelement, Betätigungskörper
- 152a: Querschnitt
- 153: Befestigungsmittel
- 154: zweites Halteelement
- 154a: Vorsprung
- 157: Umfangswandung des Blasformteils
- 162, 164: Temperieranschlüsse
- 163: Ausnehmung
- 182a, b: Dichtungseinrichtung (StdT)
- 188: Dichtungseinrichtung
- 194: O-Ring
- 202: Stufe
- 204: Kolbenelement
- 206: Kolbenraum
- 208: Öffnungen
- 212: umlaufende Dichtungseinrichtung
- 214: Kolbenteller
- B1, B2: Bereiche
- F1, F2: Teilkräfte
- E: Richtung
- R: Bewegungsrichtung des Betätigungskörpers 146
- Fres: Kraft
- L: Linie
- LR: Längsrichtung
- UR: Umfangsrichtung
- Y: Richtung
- α: Winkel

## Patentansprüche

1. Vorrichtung (1) zum Umformen von Kunststoffvorformlingen (10) zu Kunststoffbehältnissen mit einer Blasform (4), welche wenigstens zwei bezüglich einander beweglich angeordnete Blasformteile (4a, 4b) aufweist, welche in einem geschlossenen Zustand der Blasform (4) einen Hohlraum ausbilden, in dessen Innerem die Kunststoffvorformlinge (10) durch Beaufschlagung mit einem fließfähigen Medium zu den Kunststoffbehaltnissen (10a) expandierbar sind, wobei das erste Blasformteil (4a) demontierbar an einem ersten Blasformträgerschalenteil (70a) angeordnet ist und das zweite Blasformteil (4b) demontierbar an einem zweiten Blasformträgerschalenteil (70b) angeordnet ist und das erste Blasformträgerschalenteil (70a) gegenüber dem zweiten Blasformträgerschalenteil (70b) zum Öffnen und Schließen der Blasform (4) bewegbar ist, und wobei zum Halten wenigstens eines Blasformteils (4a, 4b) an dem ihm zugeordneten Blasformträgerschalenteil (70a, 70b) eine Halteeinrichtung (138) vorgesehen ist, welche einen Betätigungskörper (140) aufweist, der sich durch eine in einer Wandung (142) des Blasformträgerschalenteils (70a, 70b) und/oder eines Blasformträgerteils (6a, 6b) ausgebildete Öffnung (144) erstreckt, wobei dieser Betätigungskörper (140) gegenüber der Wandung (142) bewegbar ist und wobei an dem Betatigungskörper (140) ein erstes Halteelement (152) zum Halten des Blasformteils (4a, 4b) angeordnet ist
**dadurch gekennzeichnet, dass**
die Bewegung des Betätigungskörpers (140) gegenüber der Wandung (142) durch ein fließfähiges Medium und insbesondere pneumatisch erzeugbar ist und wenigstens ein Blasformträgerschalenteil (70a) an einem Blasformträgerteil (6a) angeordnet ist und zwischen dem Blasformtragerteil (6) und dem Blasformträgerschalenteil (70a) eine Druckkissenanordnung ausgebildet ist, wobei an dem Blasformteil (4a, 4b) ein zweites Halteelement (154) befestigt ist, welches zum Befestigen des Blasformteils (4a, 4b) an dem Blasformträgerschalenteil (70a, 70b) mit dem ersten Halteelement zusammenwirkt und in einem befestigten Zustand des Blasformteils (4a, 4b) an dem Blasformträgerschalenteil (70a, 70b) ein Halteelement (152, 154) das zweite Halteelement (154, 152) hintergreift.

2. Vorrichtung nach Anspruch 1
**dadurch gekennzeichnet, dass**
an wenigstens einem Blasformträgerschalenteil (70a, 70b) ein Anschluss für ein fließfähiges Medium angeordnet ist.

3. Vorrichtung nach wenigstens einem der vorangegangenen Ansprüche,
**dadurch gekennzeichnet, dass**
der Betätigungskörper (140) einen druckmittelbeaufschlagbaren Kolben (152) aufweist.

4. Vorrichtung nach wenigstens einem der vorangegangenen Ansprüche,
**dadurch gekennzeichnet, dass**
die Öffnung (144) in einer in der Wandung (142) ausgebildeten Ausnehmung (148) der Wandung angeordnet ist.

5. Vorrichtung nach Anspruch 1,
**dadurch gekennzeichnet, dass**
das zweite Halteelement (154) gegenüber einer Wandung (162) des Blasformteils (4a, 4b) hervorsteht.

6. Vorrichtung nach Anspruch 1,
dass in wenigstens einem Zustand trotz eines Eingriffs der Halteelemente ineinander eine Relativbewegung eines Blasformteils (4a, 4b) gegenüber dem dieses Blasformteil (4a, 4b) haltendenden Blasformträgerschalenteil (70a, 70b) ermöglicht ist.

7. Verfahren zum Befestigen von Blasformteilen (4a, 4b) an Blasformträgerschalenteilen (70a, 70b), wobei das Blasformteil (4a, 4b) in einer vorgegebenen Positionierung an dem Blasformträgerschalenteil (70a, 70b) angelegt wird und das Blasformteil (4a, 4b) nach dem Anlegen an das Blasformträgerschalenteil (70a, 70b) gegenüber dem Blasformträgerschalenteil (70a, 70b) bewegt wird, derart, dass ein an dem Blasformträgerschalenteil angeordnetes erstes Halteelement (152) und ein an dem Blasformteil (4a, 4b) befestigtes zweites Halteelement (154), welches zum Befestigen des Blasformteils (4a, 4b) an dem Blasformträgerschalenteil (70a, 70b) mit dem ersten Halteelement zusammenwirkt, in Eingriff miteinander gelangen, und anschließend das an dem Blasformträgerschalenteil angeordnete erste Halteelement (152) in einer weiteren Richtung bewegt wird, um das Blasformteil (4a, 4b) an dem Blasformträgerschalenteil zu arretieren und wobei die Bewegung des ersten Halteelements (152) durch einen Betätigungskörper (140) erzeugt wird, der sich wenigstens teilweise durch eine Wandung 142) des Blasformträgerschalenteils (70a, 70b) erstreckt
**dadurch gekennzeichnet, dass**
der Betätigungskörper (140) gegenüber der Wandung (142) durch ein fließfähiges Medium und insbesondere pneumatisch bewegt wird, wobei wenigstens ein Blasformträgerschalenteil (70a) an einem Blasformträgerteil (6a) angeordnet ist und zwischen dem Blasformträgerteil (6) und dem Blasformträgerschalenteil (70a) eine Druckkissenanordnung ausgebildet ist und in einem befestigten Zustand des Blasformteils (4a, 4b) an dem Blasformträgerschalenteil (70a, 70b) ein Halteelement (152, 154) das zweite Halteelement (154, 152) hintergreift.

## Claims

1. An apparatus (1) for shaping plastics material preforms (10) into plastics material containers with a blow mould (4) which has at least two blow mould parts (4a, 4b) which are arranged so as to be movable with respect to each other and which in a closed state of the blow mould (4) form a cavity, in the interior of which the plastics material preforms (10) are capable of being expanded to form the plastics material containers (10a) by being acted upon with a flowable medium, wherein the first blow mould part (4a) is arranged in a removable manner on a first blow mould carrier shell part (70a) and the second blow mould part (4b) is arranged in a removable manner on a second blow mould carrier shell part (70b) and the first blow mould carrier shell part (70a) is movable with respect to the second blow mould carrier shell part (70b) in order to open and close the blow mould (4), and wherein a holding device (138) is provided in order to hold at least one blow mould part (4a, 4b) on the blow mould carrier shell part (70a, 70b) associated with it, wherein the holding device (138) has an actuating member (140) which extends through an opening (144) formed in a wall (142) of the blow mould carrier shell part (70a, 70b) and/or a blow mould carrier part (6a, 6b), wherein this actuating member (140) is movable with respect to the wall (142) and wherein a first holding element (152) for holding the blow mould part (4a, 4b) is arranged on the actuating member (140),
**characterized in that**
the movement of the actuating member (140) with respect to the wall (142) is capable of being produced by a flowable medium and, in particular, in a pneumatic manner and at least one blow mould carrier shell part (70a) is arranged on a blow mould carrier part (6a) and a pressure pad arrangement is arranged between the blow mould carrier part (6) and the blow mould carrier shell part (70a), wherein a second holding member (154) is attached to the blow moulding part (4a, 4b) which cooperates with the first holding element in order to fasten the blow mould part (4a, 4b) to the blow mould carrier shell part (70a, 70b), is fastened to the blow mould part (4a, 4b) and in a fixed state of the blow mould part (4a, 4b) on the blow mould carrier shell part (70a, 70b) a holding element (152, 154) engages behind the second holding element (154, 152).

2. An apparatus according to claim 1,
**characterized in that**
a connection for a flowable medium is provided on at least one blow mould carrier shell part (70a, 70b).

3. An apparatus according to at least one of the preceding claims,
**characterized in that**
the actuating member (140) has a piston (152) capable of being acted upon by pressure medium.

4. An apparatus according to at least one of the preceding claims,
**characterized in that**
the opening (144) is situated in a recess (148) formed in the wall (142) of the wall.

5. An apparatus according to claim 1,
**characterized in that**
the second holding element (154) projects with respect to a wall (162) of the blow mould part (4a, 4b).

6. An apparatus according to claim 1,
**characterized in that**
a relative movement of a blow mould part (4a, 4b) with respect to the blow mould carrier shell part (70a, 70b) holding this blow mould part (4a, 4b) is made possible in at least one state despite the engagement of the holding elements one in the other.

7. A method of fastening blow mould parts (4a, 4b) on blow mould carrier shell parts (70a, 70b), wherein the blow mould part (4a, 4b) is arranged in a preset positioning on the blow mould carrier shell part (70a, 70b), and after the blow mould part (4a, 4b) has been applied to the blow mould carrier shell part (70a, 70b) it is moved with respect to the blow mould carrier shell part (70a, 70b) in such a way that a first holding element (152) arranged on the blow mould carrier shell part and a second holding element (154) arranged on the blow mould part (4a, 4b) engage with each other, and, after that, the first holding element (152) arranged on the blow mould carrier shell part is moved in a further direction in order to lock the blow mould part (4a, 4b) on the blow mould carrier shell part, and wherein the movement of the first holding element (152) is produced by an actuating member (140) which extends at least in part through a wall (142) of the blow mould carrier shell part (70a, 70b),
**characterized in that**
actuating member (140) is moved relative to the wall (142) by a flowable medium, in particular pneumatically, wherein at least one blow mould carrier shell part (70a) is arranged on a blow mould carrier part (6a) and a pressure pad arrangement is arranged between the blow mould carrier part (6) and the blow mould carrier shell part (70a) and in a fixed state of the blow mould part (4a, 4b) on the blow mould carrier shell part (70a, 70b) a holding element (152, 154) engages behind the second holding element (154, 152).

## Revendications

1. Dispositif (1) de transformation d'ébauches en matière plastique (10) en récipients en matière plastique, comprenant un moule de soufflage (4), lequel comprend au moins deux parties de moule de soufflage (4a, 4b) montées mobiles l'une par rapport à l'autre, lesquelles, une fois le moule de soufflage (4) fermé, forment une cavité à l'intérieur de laquelle les ébauches en matière plastique (10) peuvent être mises en expansion par application d'un milieu fluide de manière à obtenir les récipients en matière plastique (10a), dans lequel la première partie de moule de soufflage (4a) est agencée de manière démontable sur une première partie de coque de support de moule de soufflage (70a) et la deuxième partie de moule de soufflage (4b) est agencée de manière démontable sur une deuxième partie de coque de support de moule de soufflage (70b) et la première partie de coque de support de moule de soufflage (70a) peut être déplacée par rapport à la deuxième partie de coque de support de moule de soufflage (70b) pour ouvrir et fermer le moule de soufflage (4), et dans lequel, pour retenir au moins une partie de moule de soufflage (4a, 4b) sur la partie de coque de support de moule de soufflage (70a, 70b) qui lui est associée, un système de retenue (138) est prévu, lequel comprend un corps d'actionnement (140) qui s'étend à travers une ouverture (144) ménagée dans une paroi (142) de la partie de coque de support de moule de soufflage (70a, 70b) et/ou d'une partie de support de moule de soufflage (6a, 6b), dans lequel ce corps d'actionnement (140) est mobile par rapport à la paroi (142) et dans lequel un premier élément de retenue (152) destiné à retenir la partie de moule de soufflage (4a, 4b) est agencé sur le corps d'actionnement (140),
**caractérisé en ce que**
le mouvement du corps d'actionnement (140) par rapport à la paroi (142) peut être produit par un milieu fluide, et en particulier de manière pneumatique, et au moins une partie de coque de support de moule de soufflage (70a) est agencée sur une partie de support de moule de soufflage (6a) et un ensemble tampon de pression est formé entre la partie de support de moule de soufflage (6) et la partie de coque de support de moule de soufflage (70a), dans lequel un deuxième élément de retenue (154) est fixé à la partie de moule de soufflage (4a, 4b) et coopère avec le premier élément de retenue pour fixer la partie de moule de soufflage (4a, 4b) à la partie de coque de support de moule de soufflage (70a, 70b) et, une fois la partie de moule de soufflage (4a, 4b) fixée à la partie de coque de support de moule de soufflage (70a, 70b), un élément de retenue (152, 154) enserre le deuxième élément de retenue (154, 152) par l'arrière.

2. Dispositif selon la revendication 1,
**caractérisé en ce que**
un raccord pour un milieu fluide est agencé sur au moins une partie de coque de support de moule de soufflage (70a, 70b).

3. Dispositif selon au moins l'une des revendications précédentes,
**caractérisé en ce que**
le corps d'actionnement (140) comprend un piston (152) pouvant être exposé à un milieu sous pression.

4. Dispositif selon au moins l'une des revendications précédentes,
**caractérisé en ce que**
l'ouverture (144) est agencée dans un évidement (148) de la paroi ménagé dans la paroi (142).

5. Dispositif selon la revendication 1,
**caractérisé en ce que**
le deuxième élément de retenue (154) fait saillie d'une paroi (162) de la partie de moule de soufflage (4a, 4b).

6. Dispositif selon la revendication 1,
**caractérisé en ce que**
dans au moins un état, malgré une insertion des éléments de retenue l'un dans l'autre, un mouvement relatif d'une partie de moule de soufflage (4a, 4b) par rapport à la partie de coque de support de moule de soufflage (70a, 70b) retenant cette partie de moule de soufflage (4a, 4b) est permis.

7. Procédé de fixation de parties de moule de soufflage (4a, 4b) à des parties de coque de support de moule de soufflage (70a, 70b), dans lequel la partie de moule de soufflage (4a, 4b) est appliquée sur la partie de coque de support de moule de soufflage (70a, 70b) dans un positionnement prédéfini et la partie de moule de soufflage (4a, 4b), une fois appliquée sur la partie de coque de support de moule de soufflage (70a, 70b), est déplacée par rapport à la partie de coque de support de moule de soufflage (70a, 70b), de telle manière qu'un premier élément de retenue (152) agencé sur la partie de coque de support de moule de soufflage et un deuxième élément de retenue (154) fixé à la partie de moule de soufflage (4a, 4b), lequel deuxième élément de retenue coopère avec le premier élément de retenue pour fixer la partie de moule de soufflage (4a, 4b) à la partie de coque de support de moule de soufflage (70a, 70b), parviennent en contact l'un avec l'autre, et immédiatement après, le premier élément de retenue (152) agencé sur la partie de coque de support de moule de soufflage est déplacé dans une autre direction, afin de bloquer la partie de moule de soufflage (4a, 4b) sur la partie de coque de support de moule de soufflage, et dans lequel le déplacement du premier élément de retenue (152) est produit par un corps d'actionnement (140) qui s'étend au moins en partie à travers une paroi (142) de la partie de coque de support de moule de soufflage (70a, 70b),
**caractérisé en ce que**
le corps d'actionnement (140) est déplacé par rapport à la paroi (142) par un milieu fluide et en particulier de manière pneumatique, dans lequel au moins une partie de coque de support de moule de soufflage (70a) est agencée sur une partie de support de moule de soufflage (6a) et un ensemble tampon de pression est formé entre la partie de support de moule de soufflage (6) et la partie de coque de support de moule de soufflage (70a) et, une fois la partie de moule de soufflage (4a, 4b) fixée à la partie de coque de support de moule de soufflage (70a, 70b), un élément de retenue (152, 154) enserre le deuxième élément de retenue (154, 152) par l'arrière.
